Europäisches Patentamt

European Patent Office

Office européen des brevets

(19)

(11) **EP 1 361 236 B1**

(12) **EUROPEAN PATENT SPECIFICATION**

(45) Date of publication and mention
of the grant of the patent:
**29.12.2004 Bulletin 2004/53**

(51) Int Cl.⁷: **C08G 18/12**, C08G 18/72,
C08G 18/48, C08G 18/54,
C09D 175/04, C09D 11/00

(21) Application number: **02009427.2**

(22) Date of filing: **25.04.2002**

(54) **A polyurethane resin derived from hard ketonic resins**

Polyurethanharz aus harten Ketonharzen

Résine de polyuréthane dérivée de résines cétoniques dures

(84) Designated Contracting States:
**AT BE CH CY DE DK ES FI FR GB GR IE IT LI LU
MC NL PT SE TR**

(43) Date of publication of application:
**12.11.2003 Bulletin 2003/46**

(73) Proprietor: **SICPA HOLDING S.A.**
**1008 Prilly (CH)**

(72) Inventors:
• **Denis, Eugene**
**74800 La Roche sur Foron (FR)**
• **Gilles, Eisele**
**74250 Fillinges (FR)**
• **Gilles, Catherin**
**01630 St. Genis Pouilly (FR)**

(74) Representative: **Hepp, Dieter et al**
**Hepp, Wenger & Ryffel AG,**
**Friedtalweg 5**
**9500 Wil (CH)**

(56) References cited:
**EP-A- 0 107 097      EP-A- 0 604 890**
**EP-A- 1 229 090      WO-A-01/14442**
**US-A- 5 700 867**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a polyurethane resin, to a coating composition comprising said polyurethane resin, to the use of said polyurethane resin for printing plastic substrates, to a method of producing a polyurethane resin and to a method of producing a laminate carrying a printed image, according to the preamble of the independent claims.

Polyurethane resins are the binders of choice in solvent borne coating compositions for plastic films and in the production of image carrying laminates. Laminates are multilayered shaped articles in,which - according to the needs of the final article - each of the layers consist either of the same or of different materials. The preferred materials are paper, wood, textiles, metal and plastic films. In the field of food packaging, the laminates are mostly made from plastic or metal films, in particular metallized films, or a combination of both. Film materials are chosen such that the laminates can be subjected to sterilization processes without deterioriation of the film and/or the laminate. As a further advantage laminates impart to prints or generally images a satisfying appearance with respect to gloss and color fastness. Generally laminates are produced by either joining two or more layers by means of adhesives or by adhesive-free extrusion coating. Irrespective of the production process a print or generally any kind of image which does not necessarily have to be printed can be applied to one or both of the layers prior to applying the next layer (Römpp Lexikon, Lacke und Druckfarben, ed. U.Zorll, Georg Thieme Verlag, Stuttgart, New York 1998, p.214 and 318).

Coating compositions for laminates, which are mainly in the form of printing inks, have to satisfy high standards. The resin as the film forming part of the composition must provide the dried layer with the required adhesive strength both to the underlying substrate and to the adhesive or to the extruded layer. As a further requirement the resin must impart to the dried layer stability during and after sterilization processes and/or treatment in boiling water even over a prolonged period of time (e.g. during food preparation). Further the dried layer must show blocking resistance and stability during sealing of the laminate (e.g. in the production of bags). The composition - as a printing ink -must be printable in flexo and gravure printing processes which are the techniques commonly used for printing plastic films. Thus, the resin must allow the printing ink to be thinly liquid, rapidly drying and to be soluble in esters and in alcohols, in particular in ethanol.

EP-604 890 teaches a printing ink (for printing laminates) based on a polyurethane resin. The polyurethane resin is the reaction product of a high molecular weight polyol compound of a molecular weight in the range of between 3000 to 10000, a low molecular weight polyol compound of a molecular weight of less than 200, an organic diisocyanate compound, a chain extender and optionally a reaction terminating agent. The polyol compounds are chosen such that the whole of the high molecular weight polyol compound and the low molecular weight polyol compound has an average molecular weight in the range of between 1500 and 2700, the isocyanate index of the diisocyanate being more than 2.0 and the nitrogen content of the polyurethane resin derived from the isocyanate groups of the diisocyanate being from 1.3 to 1.95% by weight. Only standard polyether polyols such as polyethylene glycol are used. Furthermore, the importance of the selected molecular weight range of the polyol component is stressed in that by using a polyol component having a lesser molecular weight an ink having poor adhesiveness and adaptability for boiling or retorting treatment is obtained.

Whereas printed and dried layers produced with the ink of EP-604 890 show in most of the cases the required bond strength, the initial adhesiveness of the layers to the underlying substrate, i.e. the adhesiveness within the first 30 seconds after drying, is poor. A lack of initial adhesiveness results in at least partial transfer of the printed layers to the back side of the substrate/film to which the layer has been applied during storage on rollers or stacks. A further drawback of the prints/layers produced with the ink of EP 604 890 is their lack in heat resistance in particular on coextruded polypropylene and polyester. The latter results in damages on edges of the layers during heat treatment of the laminate. In addition the printing ink shows poor compatibility with alcohols as the solvent of choice in flexographic applications. All these drawbacks are mainly due to lack of performance of the polyurethane resin.

It was the object of the present invention to provide polyurethane resins applicable as film forming binders in coating compositions showing a good initial adhesiveness and a good compatibility with alcohols as well as a good heat resistance, and especially showing good adhesiveness on specific substrates and being harder than common PU resins, so that - in the broadest sense - any kind of dried layers on plastic films and/or laminates can be obtained, said layers having an excellent initial adhesiveness in particular such that the layer is not damaged during storing and further processing of the substrate/film and during finishing of the laminate, in particular that the risk of delamination during sealing of the plastic film or laminate is reduced.

The above object is solved according to the present invention by a polyurethane resin being the reaction product of at least one diisocyanate and a group of components having isocyanate reactive functional groups, said group of components comprising:

a) a first group of one or more polyether polyols each having an average molecular weight in the range of between 1000 to 12000 g/mol,

b) a second group of one or more hard ketonic resins having preferably a hydroxy value of at least 280mg KOH/g,

c) a third group of one or more polyols each having an average molecular weight of equal or less than 800 g/mol, and selected from the group consisting of monomeric diols, dihydroxy polyether polyols, and polyester polyols, wherein hydroxy value of the polyester is at least 140 mg KOH/g, and

d) at least one amine and a reaction terminating agent,

wherein the ratio of the equivalent weights of the diisocyanate to the components having isocyanate reactive functional groups is selected such that essentially all of the isocyanate groups of the diisocyanate are present as the reaction product with one of said isocyanate reactive functional groups.

The use of a hard ketonic resins as one isocyanate reactive component provides PU resins which are harder than commonly used PU resins and which show good adhesiveness on specific substrates such as BOPP (biaxially oriented polypropylene).

According to the present invention, definitions of ranges are intended to include the boundaries of those ranges. For example, a molecular weight range of from 2000 to 3000 g/mol shall also mean to include compounds having an average molecular weight of 2000 g/mol and of 3000 g/mol.

The polyurethane resin of the present invention has a weight average molecular weight of between 20000 to 80000 g/mol, preferably between 35000 to 55000 g/mol and is soluble in organic solvents which comprise alcohols such as ethanol and ethyl acetate.

In a preferred embodiment the polyurethane resin of the present invention has a urethanisation between 10 to 20%.

The favourable properties of the polyurethane resin with regard to its binder qualities in coatings can be influenced by a series of equivalent weight ratios between the reactands. It is to be understood that all the ratios listed hereinafter merely represent embodiments adapted to meet diverse needs of the resin:

According to a preferred embodiment of the present invention, the ratio of the equivalent weights of the diisocyanate to the entirety of the polyether polyols of the first group, of the hard ketonic resins of the second group and of the polyols of the third group is in a range of 3.6 : 1 to 1 : 1, preferably 1,5 : 1.

According to another preferred embodiment of the present invention, the ratio of the equivalent weights of the diisocyanate to the components having isocyanate reactive functional groups is preferably in a range of between 0.95 : 1 to 1.2 : 1, more preferably of between 1 : 1 to 1.1 : 1.

According to another preferred embodiment of the present invention, the ratio of the equivalent weights of the diisocyanate to the amines is in a range of 3 : 1 to 6: 1, preferably in a range of between 3 : 1 to 5 : 1.

In a preferred embodiment the diisocyanates are selected from the groups consisting of isophorone-diisocyanate (IPDI), 4,4'- diisocyanato-diphenylmethane (MDI), hexamethylene-diisocyanate (HMDI) dicyclohexylmethane diisocyanate and toluol-diisocyanate (TDI). In particular the IPDI is either used alone or in a 1 : 1 mixture with MDI. In a further preferred embodiment even polyisocyanate resins are applicable. However, it is to be understood that any diisocyanate commonly used in the synthesis of polyurethane resins can be applied for the purpose of the present invention.

As components having isocyanate reactive functional groups only those components are applied which contain hydroxy and/or amine groups. Although aminoalcohols (compounds containing hydroxy and amine groups) are not excluded from the present invention, pure components, i.e. components which have either hydroxy or amine groups as the only isocyanate reactive functional groups are preferred.

The polyether polyols of the first group are preferably selected from the group consisting of dihydroxy- and trihydroxy polyether polyols having an average molecular weight of from 1000 to 12000 g/mol, preferably 2000 to 6000 g/mol, for example with a hydroxy value in a range of between 18.7 and 56 mg KOH/g. Polyoxyalkylene glycols such as Polypropylene glycol (PPG) or Polytetrahydrofurane (poly(THF)) are the most preferred dihydroxy polyether polyols. Polypropylene glycol (PPG) has worked out to be the most suitable polyoxyalkylene glycol in the synthesis of the polyurethane resin of the present invention. Further preferred as dihydroxy polyether polyol is a polycaprolactone based polyether. However, also polyols based on triols or even higher functional polyols as monomers such as glycerin, trimethylolpropane, pentaerythrithol, sorbitol, trimethylolethane or 1,2,3-butanetriol are suitable for the purpose of the present invention.

The hard ketonic resins of the second group has a hydroxy value of at least 280mg KOH/g but not more than 500mg KOH/g. More preferably, the hard ketonic resin is the hydrogenated condensation product of an aromatic ketone with an aldehyde. According to the present invention, the hard ketonic resin is most preferably the hydrogenated condensation product of acetophenone and formaldehyde. Such a resin is sold, for example, under the trade name synthetic resin SK from Hüls and has a hydroxyl number of around 325 mg KOH/g.

The polyols of the third group are selected from the group consisting of monomeric diols, such as neopentyl glycol, hexane diol or 1.4 butanediol, dihydroxy polyether polyols such as polypropylene glycol, or polyester polyols. The polyester polyols preferably have a hydroxy value of at least 140mg KOH/g. Preferably the polyester polyol is an adipate polyester based polyol.

The amine applied in the synthesis of the polyurethane resin of the present invention is selected from those having an average molecular weight in the range of between 60 to 400g/mol. Preferably the amine is a diamine. The diamine are preferably selected from the group of 1.3 bis (amino ethyl) cyclohexane,m-xylene diamine or isophorone diamine. Isophorone diamine (IPDA) influences the initial adhesion of coatings to some kind of plastic substrates favourably.

The terminating agents are selected from the group consisting of monoethanol amines such as mono-, di-, triethanolamine, ethanol, n-propanol, isopropanol, 1,4-butandiol.

A particularly preferred polyurethane resin is the reaction product of a diisocyanate such as a 1:1 mixture of IPDI and MDI with isocyanate-reactive compounds comprising a polypropylene glycol (PPG) having an average molecular weight of around 4000-4500 g/mol, synthetic resin SK as hard ketonic resin, 1,4-butanediol as low molecular weight polyol, and one or more amine compounds such as IPDA and monoethanolamine.

The polyurethane resin according to the present invention can by synthesized by

a) first reacting a mixture comprising: a first group of one or more polyether polyols each having an average molecular weight in the range of between 1000 to 12000 g/mol, a second group of one or more hard ketonic resins having preferably a hydroxy value of at least 280mg KOH/g, and a third group of one or more polyols each having an average molecular weight of equal or less than 800 g/mol selected from the group consisting of monomeric diols, dihydroxy polyether polyols, and polyester polyols, wherein hydroxy value of the polyester is at least 140 mg KOH/g, and, with at least one diisocyanate to an isocyanate terminated prepolymer, the ratio of the equivalent weights of the diisocyanate to the entirety of the polyether polyols of the first group, of the hard ketonic resins of the second group and of the polyols of the third group is in a range of 3.6 : 1 to 1 : 1, and

b) in a second step reacting said isocyanate terminated prepolymer with at least one diamine, and

c) in a third step reacting the product obtained according to step b) with a terminating agent to a saturated polyurethane resin.

Saturated in this context means that the polyurethane resin has essentially no free unreacted isocyanates left.

The conditions under which the starting materials are reacted with each other are the standard methods for synthesizing polyurethane resins and are commonly known to the man skilled in the art.

Further part of the present invention is a coating composition comprising an organic solvent and the polyurethane resin of the present invention as at least one of the film forming binders. In a preferred embodiment the coating composition is a printing ink for printing plastic substrates and for the production of printed laminates. In both the coating composition and the printing ink, the polyurethane resin can be applied as the sole film forming binder.

The solvent is selected from the group of polar organic solvents, preferably from the group of alcohols and esters.

The polyurethane resin allows the printing ink to be easily adjusted to the needs of flexographic and gravure printing. Such an ink is soluble in alcohols, e.g. in ethanol, has a low viscosity, thus is thinly liquid, with a viscosity preferably between 30 to 100 seconds in a Cup 4 at 23°C or 80 to 350 mpa·s at 23°C.

Depending on the chemical structure of the polyurethane resin and thus on the chemical nature of the reactands and their respective ratios to each other the printing inks are adjustable to the needs of different kinds of plastic substrates and/or application methods.

In the context of the present invention the following definitions are given:

- The molecular weights are expressed as weight average molecular weights.

- The average molecular weight of sum of the polyols of the first, second, and third group is calculated

$$\sum_{i,x=1}^{i,x=3} (Mw_{ix} \cdot w_{ix})$$

$Mw_{ix}$ = molecular weight of polyol i in group x, wherein x= 1-3

$w_{ix}$ = mol fraction of polyol i in group x, wherein x= 1-3

The term 'film forming' is defined according to DIN 55945: 1996-09. Film forming is the generic term for the transition of a coating layer from the liquid to the solid state. Film forming occurs by means of physical drying and/or curing. Both processes proceed simultaneously or one after the other. The polyurethane resin of the present invention is film forming under standard conditions (25°C, minimum 40% relative humidity). Whereas the term "drying" is more related to the process engineering used for drying the liquid layer, such as ovens and temperatures, the term "curing" is related to the chemical processes within the resin during the drying process. The polyurethane of the present invention is of the non-crosslinking type.

"Initial adhesion" is defined as being the adhesion immediately after drying and up to 30 seconds maximum after drying of the layer.

"Drying" means substantial removal of the solvent from the layer. The latter is one of the requirement that the layer becomes solid. The residual solvent in the layer is not more than 10% by weight of the weight of the overal solvent. A dried layer is a layer of a thickness between 4 and 6 μm in particular 5 μm after treatment in an IR-oven by 70 - 80°C for less than one minute. In the solid state the layer is tack-free. In case the layer is thicker or thinner either the oven temperature has to be increased/decreased or the duration of heat treatment has to be adapted correspondingly.

"Layer" and "image" are used synonymously throughout the specification. Layers and images are in form of pictures, writings, overprints,(overprint varnishes) and their meaning should not be limited by their form, extension and thickness.

In the context of the present invention all technical terms shall be defined according to Römpp Lexikon, ed. U.Zoll, Georg Thieme Verlag Stuttgart, 1998.

The present invention further encompasses a method of producing a laminate carrying a printed image, said method comprises the step of

> a) providing a printing ink comprising at least one organic solvent and at least one polyurethane resin of the present invention as at least one film forming binder and
> b) applying a layer to a first substrate by printing said printing ink provided in step (a) in a flexographic and/or gravure printing process to said first substrate
> c) removing said solvent from said layer applied in step (b) thereby drying and/or curing the layer
> d) applying an adhesive to the layer of step (c) and finishing the laminate by applying a second substrate on the adhesive.

Preferably, the first and the second substrates are of a plastic material, preferably of polyolefinic nature. The first and the second substrate can also be of different chemical nature like polyester or polyamide.

According to the present invention, as an adhesive in this process can be used any conventional solvent-free adhesive or solvent-based adhesive. Examples for solvent-based adhesives to be used according to the present invention are Adcote 545/CAT F and Morton 301A/350A from Rohm&Haas, Novacote 275A/CA12 or Novacote 120 ASI/111B from Novacote Flexpack, and Henkel UK 3640/UK 6800 from Henkel. An example for a solvent-free adhesive to be used according to the present invention is Mor-free SK403/C83 from Rohm&Haas.

The adhesives are applied to the layer according to conventional methods, for example by using a hand coater. Solvent-free adhesives are preferably diluted with a conventional diluent such as ethyl acetate before application. Preferably, a solution containing 20 % by weight to 80 by weight, more preferably 30 by weight to 60 by weight of the solvent-free adhesive is prepared hereby.

In the case of solvent-based adhesives, it is preferred according to the present invention to apply said adhesive to the printed layer of a substrate, and then to finish the laminate by applying a second substrate on the adhesive. In the case of a solvent-free adhesive, however, it is more preferred to apply said adhesive to an unprinted layer of a substrate, and then to finish the laminate by applying the printed layer of a second substrate to the adhesive.

Further part of the present invention is therefore a laminate produced by the method mentioned hereinbefore. Of course, the laminate can also be produced by extruding the second substrate on the first substrate carrying the dried layer. This method does not call for an adhesive.

If necessary, the ink composition of the present invention can contain additional binder resins, e.g. cellulosic resins, acrylic resins, polyvinyl chloride.

The present invention will be described in more detail by the following examples. Unless otherwise indicated, all percentages are % by weight. Eq stands for equivalents.

General synthesis of the polyurethane resin

A five-neck flask equipped with two additions funnels, a gas introduction means, an agitator and a thermometer is charged with a mixture of 304g ethyl acetate and 0.06% Irganox 1076. The mixture is thermostated at 25°C at an agitation velocity of 60rpm and an nitrogen stream of 0.4m3/h. The temperature is increased to 60°C and a mixture of 9,7g IPDI, 10.9 g of Desmodur 2460M (MDI) and 0.03% DBTDL (catalysator) diluted in 0.03% ethyl acetate is added to the flask. The agitation velocity is increased to 90 rpm. To the isocyanate solution 115 g Acclaim 4200 is added over a period of 10 minutes. The reaction is conducted by a temperature of 74°C for 180 minutes. In the second step a mixture of 5,7g Resin SK and 5,7g ethyl acetate is slowly added to the prepolymer solution of the first step, the reaction is conducted for 60 minutes before adding in a third step 4g isophorone diamine at an agitation velocity of 120rpm. The reaction is conducted for another 15 minutes. In a fourth step 4,8g Resin SK and 4,8g ethyl acetate is added to the prepolymer solution obtained in the third step to further increase the molecular weight of the prepolymer. After a reaction time of 60-180 minutes 35g of ethanol as the fifth and dilution step.

The NCO-values are determined after each step and the increase in molecular weight of the polyurethane during synthesis is observed by GPC measurements (Waters 410 and 510; column Lichrogel PS 4000/40/20, calibration Polystyrene : 580-2200-5100-11600-30300-68000-127000-330000).

Specification of the polyurethane:

| | |
|---|---|
| Solid content | 30 % |
| viscosity | 6000 mPa.s at 25°C |
| Mn | 15000 |
| Mw | 35000 |
| Mz | 65000 |

Method of measurement the initial adhesion:

A self adhesive tape (10 cm, type 683 of 3M) is applied under uniform pressure onto a printed layer immediately after drying of the layer and torn off the substrate immediately thereafter. The quantity of the print adhered to the tape is classified on a scale from 0 to 5 wherein 0 means more than 95% of the printed layer adhered to the tape, 1 means more than 50% of the printed layer adhered to the tape, 2 means less than 30% of the printed layer adhered to the tape; 3 means less than 20% of the printed layer adhered to the tape, 4 means less than 10% of the printed layer adhered to the tape and 5 is less than 2% of the printed layer adhered to the tape. The test results is executed additionally in dependence of the drying time of the printed layer.

Formulation of printing ink comprising the polyurethane resins according to the present invention

| Formulation of the technologic varnish based on the PU : | |
|---|---|
| Polyurethane resin | 70 parts per weight |
| Inert RESIN | 11 parts per weight |
| Nitrocellulose | 2 parts per weight |
| Inert resin | 6 parts per weight |
| Adhesion promoter | 8 parts per weight |
| Wax | 3 parts per weight |

| Formulation of a White printing ink: | |
|---|---|
| white paste | 46 parts per weight |
| ethyl acetate | 4.5 parts per weight |
| n-propanol | 5 parts per weight |

(continued)

| Formulation of a White printing ink: | |
|---|---|
| Technologic varnish | 38 parts per weight |
| Nitrocellulose | 6.5 parts per weight |

| Formulation of a Blue printing ink : | |
|---|---|
| blue paste | 50 parts per weight |
| ethyl acetate | 4 parts per weight |
| n-propanol | 4 parts per weight |
| Technologic varnish | 38 parts per weight |
| Nitrocellulose | 4 parts per weight |

Initial adhesion, heat resistance and laminations/delamination strength are tested on substrates of different chemical nature and are compared to the corresponding results of a printing ink formulated from a polyurethane resin which was synthesized without a hydrophilic, water-soluble polyol component.

The following substrates were used:

| Product name | Chemical nature | Producer |
|---|---|---|
| MB 200 | coextruded bi-oriented polypropylene | Mobil |
| BOPP chine | biaxially oriented polypropylene | Wu Xi |

The initial adhesion and heat resistance are tested on basis of a layer of the printing ink to an underlying substrate. For the lamination/delamination test the bond strength is tested on basis of a layer of the printing ink between two plastic films. The counter substrate for all of the substrates tested is a low density polyethylene film.

Tested are: a print of the white ink as the only layer between the two plastic films, (indicated as white), a print of the cyan ink as the only layer between the two films (indicated as cyan) and a superposition of a layer of the cyan and white ink between the two films (indicated as 200%).

The technique for the production of the laminate is the adhesive based lamination technique. A printed sample of laminate having a width of 15 mm is placed between two jaws of a (dynamometer type Lhomargy). The sample is drawn out and the substrate separated from the counter-substrate. The bond strength (g/15 mm) and the delamination aspect of the tested laminate is evaluated at a speed of 200 mm/min. The bond strength is expressed as a combination of number value and letters. The number value stands for gramms needed to separate the laminate of a width of 15 mm and a dynamometer speed of 200mm/min. The higher the value the greater the bond strength. The letters indicate the kind of breakage with regard to the layer of the printing ink:

T:    Transfer of 100% of the ink layer (from the substrate to the counter substrate).
P:    Splitting of the ink layer (between substrate and counter substrate).
Z:    No stable value for the bond strength.
R:    Break/tear of one of the two films of the laminate.

Table 1

| POLYURETHANE | Example 1 (Eq) | Comparative example (Eq) |
|---|---|---|
| *Polyisocyanate* | | |
| IPDI | 1,5 | 0,254 |
| MDI | 1,5 | 0,254 |
| *Polyol from 1st group* | | |
| Acclaim 8200 | | 0,076 |
| Acclaim 4200 | 1 | 0,067 |

Table 1   (continued)

| POLYURETHANE | Example 1 (Eq) | Comparative example (Eq) |
|---|---|---|
| Acclaim 12200 | | 0,025 |
| *resin from 2nd group* | | |
| Synthetic resin SK | 0,56 | |
| *Polyol from 3rd group* | | |
| PPG 400 | | 0,049 |
| 1,4-Butanediol | 0,47 | 0,13 |
| *Amine* | | |
| IPDA | 0,84 | 0,142 |
| Monoethanolamine | 0,1 | 0,024 |
| *Additional ingredients* | | |
| Ethyl acetate | 65 % | 50 % |
| Ethanol | 5 % | 10 % |

Acclaim is a polypropylene glycol sold by Bayer. The number indicates the respective average molecular weight.

Table 2

| Inks based on Polyurethane resins | Example 1 | | | Comparative example | | |
|---|---|---|---|---|---|---|
| **Adhesion** | Cyan | White | 200% | Cyan | White | 200% |
| Support : MB 200 | 4/5 To | 4,5/5 To | 5/5 To | 4/5 To | 4/5 To | 5/5 To |
| Support: BOPP chine | 4/5 To | 4/5 To | 5/5 To | 2/5 To 3,5/5 at 5h | 4/5 To 4,5/5 at 5h | 2/5 To 4,5/5 at 5h |

Table 3

| Inks based on Polyurethane resins | Example 1 | | | Comparative example | | |
|---|---|---|---|---|---|---|
| **LAMINATION (Bond strength in g/15 mm)** | Cyan | White | 200% | Cyan | White | 200% |
| Support: MB 200 Adhesive: Adcote 545/Cat F | 350 R | 350 R | 420 R | 60 T | 40 T | 340 R |
| Support: BOPP chine Adhesive: Adcote 545/Cat F | 290 R | 290 R | 440 R | 40 T | 50 T | 210 R |
| Support: MB 200 Adhesive: Novacote 275/CA 12 | 320 R | 380 R | 280 R | 320 R | 60 T | 330 R |
| Support: BOPP chine Adhesive: Novacote 275/CA 12 | 150 R | 300 R | 300 R | 230 R | 100 T | 350 R |

## Claims

1. A polyurethane resin being the reaction product of at least one diisocyanate and a group of components having isocyanate reactive functional groups, said group of components comprising:

   a) a first group of one or more polyether polyols each having an average molecular weight in the range of between 1000 to 12000g/mol,
   b) a second group of one or more hard ketonic resins having preferably a hydroxy value of at least 280mg KOH/g,

c) a third group of one or more polyols each having an average molecular weight of equal or less than 800 g/mol and selected from the group consisting of monomeric diols, dihydroxy polyether polyols, and polyester polyols, wherein hydroxy value of the polyester polyol is at least 140mg KOH/g, and

d) at least one amine and a reaction terminating agent,

wherein the ratio of the equivalent weights of the diisocyanate to the components having isocyanate reactive functional groups is selected such that essentially all of the isocyanate groups of the diisocyanate are present as the reaction product with one of said isocyanate reactive functional groups.

2. A polyurethane resin according to claim 1 wherein the ratio of the equivalent weights of the diisocyanate to the entirety of the polyether polyols of the first group, of the hard ketonic resins of the second group and of the polyols of the third group is in a range of 3.6 : 1 to 1 : 1, preferably 1,5 : 1.

3. A polyurethane resin according to any one of the claims 1 or 2, wherein the ratio of the equivalent weights of the diisocyanate to the components having isocyanate reactive functional groups is preferably in a range of between 0.95 : 1 to 1.2 : 1, more preferably of between 1 : 1 to 1.1 : 1.

4. A polyurethane resin according to any one of the claims 1 to 3, wherein the ratio of the equivalent weights of the diisocyanate to the amines is in a range of 3 : 1 to 6: 1, preferably in a range of between 3 : 1 to 5 : 1.

5. A polyurethane resin according to any one of the claim 1 to 4, wherein the polyether polyols of the first group have an average molecular weight in the range of from 2000 to 6000g/mol.

6. A polyurethane resin according to claim 5, wherein the polyether polyols of the first group are selected from the group consisting of dihydroxy and trihydroxy polyether polyols.

7. A polyurethane resin according to claim 6, wherein the dihydroxy polyether polyol is selected from the group consisting of polyoxyalkylene glycol, preferably a polypropyleneglycol or a polytetrahydrofurane, and a caprolactone based polyether.

8. A polyurethane resin according to any one of the claim 1 to 7, wherein the hard ketonic resin is the hydrogenated condensation product of an aromatic ketone with an aldehyde.

9. A polyurethane resin according to claim 8, wherein the the hard ketonic resin is the hydrogenated condensation product of acetophenone and formaldehyde having a hydroxyl number of around 325 mg KOH/g.

10. A polyurethane resin according to any one of the claims 1 to 9, wherein the amine is a diamine, preferably selected from the group consisting of isophoronediamine, m-xylene, 1,3 bis (aminoethyl) cyclohexane.

11. . Process for preparing a polyurethane resin according to any one of claims 1 to 10, said process comprising the steps of:

a) first reacting a mixture comprising: a first group of one or more polyether polyols each having an average molecular weight in the range of between 1000 to 12000 g/mol, a second group of one or more hard ketonic resins, and a third group of one or more polyols each having an average molecular weight of equal or less than 800 g/mol, with at least one diisocyanate to an isocyanate terminated prepolymer, the ratio of the equivalent weights of the diisocyanate to the entirety of the polyether polyols of the first group, of the hard ketonic resins of the second group and of the polyols of the third group is in a range of 3.6 : 1 to 1 : 1, and

b) in a second step reacting said isocyanate terminated prepolymer with at least one diamine, and

c) in a third step reacting the product obtained according to step b) with a terminating agent to a saturated polyurethane resin.

12. Polyurethane resin, obtainable by the process according to claim 11.

13. A coating composition, preferably printing ink, comprising a solvent and at least one polyurethane resin according to one of the claims 1 to 10 or 12 as film forming binder.

14. Use of a polyurethane resin according to claims 1 to 10 or 12 as at least one film forming binder in printing inks for printing plastic substrates, preferably polyolefinic plastic substrate.

15. Method of producing a laminate carrying a printed layer, said method comprises the steps of

    a) providing a coating composition, preferably a printing ink according to claim 13;
    b) applying a layer to a first substrate, preferably a plastic foil, by printing said printing ink of step a) in a flexographic and/or gravure printing process;
    c) removing said solvent from said layer thereby drying and/or curing said layer obtained in step b),
    d) applying an adhesive to the dried and/or cured layer obtained in step c) and producing the laminate by applying at least a second substrate, preferably a plastic foil, on the adhesive.

16. Laminate produced by the method of claim 15.

**Patentansprüche**

1. Polyurethanharz, das das Reaktionsprodukt von mindestens einem Diisocyanat und einer Gruppe von Bestandteilen mit isocyanat-reaktiven funktionellen Gruppen umfasst, wobei die Gruppe der Bestandteile folgendes umfasst:

    a) eine erste Gruppe eines oder mehrerer Polyetherpolyole, wobei jedes ein durchschnittliches Molekulargewicht im Bereich von 1000 bis 12000 g/mol hat,
    b) eine zweite Gruppe eines oder mehrerer fester ketonischer Harze mit vorzugsweise einer Hydroxylzahl von mindestens 280 mg KOH/g,
    c) eine dritte Gruppe eines oder mehrerer Polyole, wobei jedes ein durchschnittliches Molekulargewicht von 800 g/mol oder weniger aufweist und aus der Gruppe bestehend aus monomeren Diolen, Dihydroxypolyetherpolyolen, und Polyesterpolyolen, wobei die Hydroxylzahl des Polyesterpolyols mindestens 140 mg KOH/g beträgt, ausgewählt ist, und
    d) mindestens ein Amin und ein Reaktionsabbruchreagenz,

    wobei das Verhältnis der Äquivalentmassen des Diisocyanats zu den Bestandteilen mit den isocyanat-reaktiven funktionellen Gruppen derart ausgewählt ist, dass im wesentlichen alle Isocyanatgruppen des Diisocyanats als Reaktionsprodukt mit einer der isocyanat-reaktiven funktionellen Gruppen vorliegen.

2. Polyurethanharz nach Anspruch 1, wobei das Verhältnis der Äquivalentmassen des Diisocyanats zur Gesamtheit der Polyetherpolyole der ersten Gruppe, der festen ketonischen Harze der zweiten Gruppe und der Polyole der dritten Gruppe im Bereich von 3,6:1 bis 1:1, vorzugsweise 1,5:1 liegt.

3. Polyurethanharz nach einem der Ansprüche 1 oder 2, wobei das Verhältnis der Äquivalentmassen des Diisocyanats zu den Bestandteilen mit isocyanat-reaktiven funktionellen Gruppen vorzugsweise im Bereich von 0,95:1 bis 1,2:1, bevorzugter im Bereich von 1:1 1 und 1,1:1 liegt.

4. Polyurethanharz nach einem der Ansprüche 1 bis 3, wobei das Verhältnis der Äquivalentmassen des Diisocyanats zu den Aminen im Bereich von 3:1 bis 6:1, vorzugsweise im Bereich von 3:1 bis 5:1 liegt.

5. Polyurethanharz nach einem der Ansprüche 1 bis 4, wobei die Polyetherpolyole der ersten Gruppe ein durchschnittliches Molekulargewicht im Bereich von 2000 bis 6000 g/mol aufweisen.

6. Polyurethanharz nach Anspruch 5, wobei die Polyetherpolyole der ersten Gruppe aus der Gruppe bestehend aus Dihydroxy- und Trihydroxypolyetherpolyolen ausgewählt sind.

7. Polyurethanharz nach Anspruch 6, wobei das Dihydroxypolyetherpolyol aus der Gruppe bestehend aus Polyoxyalkenglycol, vorzugsweise ein Polypropylenglycol oder ein Polytetrahydrofuran, und einem Caprolacton-basierten Polyether ausgewählt wird.

8. Polyurethanharz nach einem der Ansprüche 1 bis 7, wobei das feste ketonische Harz das hydrierte Kondensationsprodukt eines aromatischen Ketons mit einem Aldehyd ist.

9. Polyurethanharz nach Anspruch 8, wobei das feste ketonische Harz ein hydriertes Kondensationsprodukt von Acetophenon mit Formaldehyd ist, das eine Hydroxylzahl von ungefähr 325 mg KOH/g aufweist.

10. Polyurethanharz nach einem der Ansprüche 1 bis 9, wobei das Amin ein Diamin, vorzugsweise ausgewählt aus der Gruppe bestehend aus Isophorondiamin, m-Xylol, 1,3-bis-(Aminoethyl)-cyclohexan ist.

11. Verfahren zur Herstellung eines Polyurethanharzes nach einem der Ansprüche 1 bis 10, wobei das Verfahren die folgenden Schritte umfasst:

a) als erstes Umsetzen einer Mischung, die folgendes umfasst: eine erste Gruppe eines oder mehrerer Polyetherpolyole, die jeweils ein durchschnittliches Molekulargewicht im Bereich zwischen 1000 bis 12000 g/mol aufweisen, eine zweite Gruppe eines oder mehrerer fester ketonischer Harze, und eine dritte Gruppe eines oder mehrerer Polyole, die jeweils ein durchschnittliches Molekulargewicht von 800 g/mol oder weniger aufweisen, mit mindestens einem Diisocyanat zu einem Diisocyanat-terminierten Vorpolymer, wobei das Verhältnis der Äquivalentmassen des Diisocyanats zu der Gesamtheit der Polyetherpolyole der ersten Gruppe, der festen ketonischen Harze der zweiten Gruppe und der Polyole der dritten Gruppe im Bereich von 3,6:1 bis 1:1 liegt, und
b) in einem zweiten Schritt ein Umsetzen des Isocyanat-terminierten Vorpolymers mit mindestens einem Diamin, und
c) in einem dritten Schritt ein Umsetzen des nach Schritt b) erhaltenden Produkts mit einem Abbruchreagenz zu einem gesättigten Polyurethanharz.

12. Polyurethanharz, das durch das Verfahren nach Anspruch 11 erhältlich ist.

13. Eine Beschichtungszusammensetzung, vorzugsweise eine Druckfarbe, die ein Lösungsmittel und mindestens ein Polyurethanharz nach einem der Ansprüche 1 bis 10 oder 12 als filmbildendes Bindemittel umfasst.

14. Verwendung eines Polyurethanharzes nach einem der Ansprüche 1 bis 10 oder 12 als mindestens ein filmbildendes Bindemittel in Druckfarbe zum Bedrucken von Kunststoffsubstraten, vorzugsweise eines Polyolefinkunststoffsubstrates.

15. Verfahren zur Herstellung eines Laminats, das eine aufgedruckte Schicht trägt, wobei das Verfahren die folgenden Schritte umfasst:

a) Bereitstellen einer Beschichtungszusammensetzung, vorzugsweise einer Druckfarbe, entsprechend Anspruch 13;
b) Aufbringen einer Schicht auf ein erstes Substrat, vorzugsweise eine Kunststofffolie, durch Bedrucken mit der Druckfarbe aus Schritt a) in einem Flexo- und/oder Gravurdruckverfahren;
c) Entfernen des Lösungsmittels aus der Schicht, wodurch die in Schritt b) erhaltene Schicht getrocknet und/oder gehärtet wird,
d) Aufbringen eines Klebemittels auf die getrocknete und/oder gehärtete Schicht, die in Schritt c) erhalten wurde, und Herstellen des Laminats durch Aufbringen mindestens eines zweiten Substrats, vorzugsweise einer Kunststofffolie, auf das Klebemittel.

16. Laminat, hergestellt durch das Verfahren nach Anspruch 15.

**Revendications**

1. Résine polyuréthane, produit de la réaction d'au moins un diisocyanate et d'un groupe de composants ayant des groupes fonctionnels réactifs avec un isocyanate, ledit groupe de composants comprenant :

a) un premier groupe d'un ou plusieurs polyéther polyols, chacun ayant un poids moléculaire moyen dans la plage de 1000 à 12000 g/mole,
b) un second groupe d'une ou plusieurs résine(s) cétonique(s) dure(s) ayant de préférence un indice d'hydroxyle d'au moins 280 mg de KOH/g,
c) un troisième groupe d'un ou plusieurs polyol(s) chacun ayant un poids moléculaire moyen égal ou inférieur à 800 g/mole et choisi(s) dans le groupe constitué par des diols monomères, des dihydroxy polyéther polyols,

**EP 1 361 236 B1**

et des polyestser polyols, l'indice d'hydroxyle du polyester polyol étant d'au moins 140 mg de KOH/g, et

d) au moins une amine et un agent de terminaison de réaction,

dans laquelle le rapport des poids équivalents du diisocyanate sur les composants ayant des groupes fonctionnels réactifs avec un isocyanate est choisi de telle manière que sensiblement tous les groupes isocyanate du diisocyanate soient présents en tant que produit de réaction avec l'un desdits groupes fonctionnels réactifs avec un isocyanate.

2.  Résine polyuréthane selon la revendication 1, dans laquelle le rapport des poids équivalents du diisocyanate sur la totalité des polyéther polyols du premier groupe, des résines cétoniques dures du second groupe et des polyols du troisième groupe est dans une plage allant de 3,6 : 1 à 1 : 1, et est de préférence 1,5 : 1.

3.  Résine polyuréthane selon l'une quelconque des revendications 1 et 2, dans laquelle le rapport des poids équivalents du diisocyanate sur les composants ayant des groupes fonctionnels réactifs avec un isocyanate est de préférence dans une plage de 0,95 : 1 à 1,2 : 1, plus préférablement de 1 : 1 à 1,1 : 1.

4.  Résine polyuréthane selon l'une quelconque des revendications 1 à 3, dans laquelle le rapport des poids équivalents du diisocyanate sur les amines est dans une plage allant de 3 : 1 à 6 : 1, de préférence dans une plage de 3 : 1 à 5 : 1.

5.  Résine polyuréthane selon l'une quelconque des revendications 1 à 4, dans laquelle les polyéther polyols du premier groupe ont un poids moléculaire moyen dans la plage allant de 2000 à 6000 g/mole.

6.  Résine polyuréthane selon la revendication 5, dans laquelle les polyéther polyols du premier groupe sont choisis dans le groupe constitué par les dihydroxy et trihydroxy polyéther polyols.

7.  Résine polyuréthane selon la revendication 6, dans laquelle le dihydroxy polyéther polyol est choisi dans le groupe constitué par un polyoxyalkylène glycol, de préférence un polypropylèneglycol ou un polytétrahydrofuranne, et un polyéther à base de caprolactone.

8.  Résine polyuréthane selon l'une quelconque des revendications 1 à 7, dans laquelle la résine cétonique dure est le produit de condensation hydrogéné d'une cétone aromatique avec un aldéhyde.

9.  Résine polyuréthane selon la revendication 8, dans laquelle la résine cétonique dure est le produit de condensation hydrogéné de l'acétophénone et du formaldéhyde ayant un indice hydroxyle d'environ 325 mg KOH/g.

10.  Résine polyuréthane selon l'une quelconque des revendications 1 à 9, dans laquelle l'amine est une diamine, de préférence choisie dans le groupe constitué par l'isophoronediamine, le m-xylène, le 1,3-bis(aminoéthyl)cyclohexane.

11.  Procédé pour préparer une résine polyuréthane selon l'une quelconque des revendications 1 à 10, ledit procédé comprenant les étapes consistant à :

a) d'abord faire réagir un mélange comprenant : un premier groupe d'un ou plusieurs polyéther polyol(s) chacun ayant un poids moléculaire moyen dans la plage de 1000 et 12000 g/mole, un second groupe d'une ou plusieurs résine(s) cétonique(s) dure(s), et un troisième groupe d'un ou plusieurs polyol(s) chacun ayant un poids moléculaire moyen égal ou inférieur à 800 g/mole, avec au moins un diisocyanate pour obtenir un prépolymère terminé par isocyanate, le rapport des poids équivalents du diisocyanate sur la totalité des polyéther polyols du premier groupe, des résines cétoniques dures du second groupe et des polyols du troisième groupe est dans une plage allant de 3,6 : 1 à 1 : 1, et
b) dans une seconde étape faire réagir ledit prépolymère terminé par isocyanate avec au moins une diamine, et
c) dans une troisième étape faire réagir le produit obtenu selon l'étape b) avec un agent de terminaison pour obtenir une résine polyuréthane saturé.

12.  Résine polyuréthane que l'on peut obtenir par le procédé selon la revendication 11.

13.  Composition de revêtement, de préférence encre d'impression, comprenant un solvant et au moins une résine polyuréthane selon l'une des revendications 1 à 10 ou 12 en tant que liant formant un film.

12

**14.** Utilisation d'une résine polyuréthane selon les revendications 1 à 10 ou 12 en tant qu'au moins un liant formant un film dans des encres d'impression pour des substrats d'impression en matière plastique, de préférence un substrat en matière polyoléfinique.

**15.** Procédé pour produire un stratifié portant une couche imprimée, ledit procédé comprend les étapes consistant à

a) obtenir une composition de revêtement, de préférence une encre d'impression, selon la revendication 13 ;
b) appliquer une couche sur un premier substrat, de préférence une feuille en matière plastique, en appliquant par impression ladite encre d'impression de l'étape a) au moyen d'un procédé d'impression flexographique et/ou de gravure ;
c) éliminer ledit solvant de ladite couche en séchant et/ou en durcissant ainsi ladite couche obtenue dans l'étape b),
d) appliquer un adhésif sur la couche séchée et/ou durcie obtenue dans l'étape c) et produire le stratifié en appliquant au moins un second substrat, de préférence une feuille en matière plastique, sur l'adhésif.

**16.** Stratifié produit par le procédé de la revendication 15.